# EUROPEAN PATENT APPLICATION

(11) **EP 4 527 612 A1**
(43) Date of publication of application: **26.03.2025**
(21) Application number: 23275138.8
(22) Date of filing: 20.09.2023
(51) Int. Cl.: B32B 3/04, B32B 3/06, B32B 3/08, B32B 3/12, B32B 3/30, B32B 7/022, B32B 7/04, B32B 15/14, B32B 15/20

(54) **COMPOSITE PANEL WITH A THREADED INSERT**

(71) Applicant: B/E Aerospace (UK) Limited, Leighton Buzzard, Bedfordshire LU7 4TB (GB)
(72) Inventor: HARRIS, Adam Luke, Leighton Buzzard LU7 4FS (GB); WALL, Daniel H., Baldock SG7 5FE (GB)
(74) Representative: Dehns

(57) **Abstract**

A composite panel (200) comprising a first panel skin (202), a second panel skin (203) and a core (201) arranged between the first panel skin (202) and the second panel skin (203). The composite panel (200) having a threaded insert for receiving a fastener, the threaded insert arranged within a cavity of the core (201) of the composite panel (200).

## Description

### Technical field

This disclosure relates to composite panels and the manufacture of composite panels. In particular, this disclosure relates to threaded inserts cured into composite panels during the manufacturing process.

### Background

Composite panels may require the installation of threaded inserts, e.g. for receiving a bolt to fix an object to the composite panel. Currently, these inserts are installed by forming a cavity in a composite panel, i.e. through the panel skin and into the core of the composite panel, for housing the insert. The insert may be secured to the composite panel by potting the insert, i.e. filling the cavity with a potting compound and placing the insert in the potted cavity to allow the potting compound to adhere to the insert as it hardens.

However, as the cavity in the core is formed through the panel skin, there is no panel skin covering the external face of the threaded insert. As a result, the pull-out strength of the threaded insert is limited, i.e. relatively little force is required to pull out the insert. In addition, the lack of a panel skin covering the external face of the threaded insert results in poorer transfer of forces from the threaded insert to the composite panel, which also results in a reduction in the pull-out strength of the insert. Furthermore, the use of potting compound requires additional processing of the composite panel and extra material to be used.

It is also possible for the potting compound to enter the threaded hole in the insert for receiving the bolt. This may prevent the bolt screwing into the threaded hole unless the threaded hole is reworked, e.g. cleaned out or re-tapped. This reworking process is time consuming and inefficient.

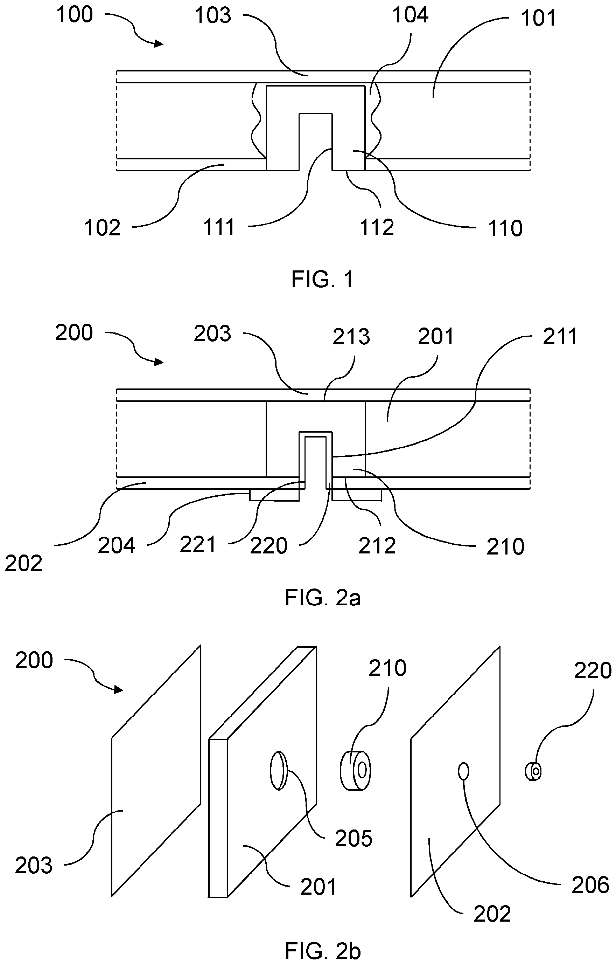

Figure 1 shows an example of a composite panel 100 comprising a threaded insert 110. In this example, a cavity has been formed in a core 101 of the composite panel 100 through a first panel skin 102 of the composite panel 100. The cavity extends through the core 101 to the second panel skin 103 of the composite panel 103. The threaded insert 110, comprising a threaded hole 111, is bonded to the composite panel 100 by: filling the cavity with potting compound 104; placing the threaded insert 110 within the cavity; and allowing the potting compound 104 to cure.

As the cavity is formed through the first panel skin 102, e.g. by drilling through the first panel skin 102, the first face 112 of the threaded insert 110 may have limited or no attachment to the first panel skin 102.

### Summary

When viewed from a first aspect, the present disclosure provides a composite panel comprising:
a first panel skin;
a second panel skin;
a core arranged between the first panel skin and the second panel skin;
wherein the core is bonded to the first panel skin and the second panel skin;
the composite panel further comprising a two-part insert comprising:
   a first insert piece;
   and a second insert piece;
wherein the core defines a cavity extending between the first panel skin and the second panel skin;
wherein the first insert piece is arranged within the cavity and at least partially enclosed by the core, the first panel skin and the second panel skin;
wherein a first face of the first insert piece is bonded to the first panel skin, and a second face of the first insert piece is bonded to the second panel skin;
wherein the first insert piece defines a bore extending from the first face in a direction towards the second face;
wherein the first panel skin defines a through-aperture corresponding to the position of the bore;
wherein the second insert piece is arranged in the bore and attached to the first insert piece; and
wherein the second insert piece defines a threaded hole for receiving a fastener.

A composite panel, i.e. a sandwich panel, may be defined as a panel comprising a core sandwiched between two layers of material, i.e. panel skins.

The first panel skin and the second panel skin at least partially enclosing the first insert piece may be defined as the first panel skin and the second panel skin respectively at least partially overlapping the first face of the first insert piece and the second face of the first insert piece.

In some examples, a first bonding material bonds the first panel skin to the core; wherein the first bonding material bonds the first panel skin to the first face of the first insert piece.

In some examples, a second bonding material bonds the second panel skin to the core; wherein the second bonding material bonds the second panel skin to the second face of the first insert piece.

In some examples, the second bonding material is the same as the first bonding material.

In some examples, the first panel skin is made of the first bonding material. For example, the first panel skin may be at least partially melted to form the first bonding material.

In some examples, the second panel skin is made of the second bonding material.

In some examples, the first insert piece is bonded to the core.

In some examples, the first bonding material and/or the second bonding material bond the first insert piece to the core.

In some examples, the second insert piece defines a plurality of threaded holes.

In some examples, the first panel skin comprises a first fibre reinforced polymer. For example, glass reinforced polymer.

In some examples, the second panel skin comprises a second fibre reinforced polymer.

In some examples, the first fibre reinforced polymer is the same as the second fibre reinforced polymer.

In some examples, the first insert piece has a solid structure. A solid structure may be defined as a homogenous structure having no voids. For example, as opposed to a honeycomb structure which comprises a plurality of voids.

In some examples, the first insert piece is a monolithic piece.

In some examples, the first insert piece is a plastic piece.

In some examples, the first insert piece is a metal piece.

In some examples, the first insert piece is an aluminium piece.

In some examples, the second insert piece has a solid structure.

In some examples, the second insert piece is a monolithic piece.

In some examples, the second insert piece is a plastic piece.

In some examples, the second insert piece is a metal piece.

In some examples, the second insert piece is an aluminium piece.

In some examples, the first insert piece substantially fills the cavity.

In some examples, the core has a non-solid structure. For example, the core may have a honeycomb structure.

In some examples, the second insert piece is fixedly attached to the first insert piece. Fixedly attached may be defined as a form of attachment that is designed not to come loose or be removed during use.

In some examples, the second insert piece is attached to the first insert piece by an adhesive.

In some examples, the second insert piece is attached to the first insert piece by a mechanical interlock.

In some examples, the mechanical interlock is a screw fit. For example, an outer thread on the second insert piece may screw into an inner thread on the bore of first insert piece. The inner thread on the bore of the first insert piece may be tapped prior to the attachment of the first and second insert pieces. Alternatively, the second insert piece may tap the thread in the bore of the second insert piece as it is screwed in, i.e. the second insert piece may comprise a self-tapping outer screw thread. It may be possible for the screw fit to allow the second insert piece to screw and unscrew into the first insert piece. Alternatively, the screw fit may include a self-locking thread between the bore and the second insert piece, i.e. the second insert piece may be able to screw into the first insert piece but may be unable to unscrew from the first insert piece unless destructive force is applied.

In some examples, the mechanical interlock is a snap-fit between the bore and the second insert piece. For example, the second insert piece may comprise at least one protrusion extending in a direction radially outwards of the bore which forms a snap-fit mechanical interlock with a corresponding indentation defined in the bore of the first insert piece. In another example, the second insert piece defines an indentation, and the first insert piece comprises a protrusion which forms a snap-fit mechanical interlock with the indentation. In a further example, both the second insert piece and the first insert piece comprise a protrusion, and the protrusions form a snap-fit interlock with one another.

In some examples, the attachment between the first insert piece and the second insert piece forms a floating attachment, arranged to allow movement of the second insert piece relative to the first insert piece. For example, the second insert piece may be allowed to move in a radial direction relative to the bore and/or in an axial direction relative to the bore.

In some examples, the composite panel further comprises one or more additional layers of panel skin material attached to an exterior face of the first panel skin at least locally to the first insert piece.

When viewed from a second aspect, the present disclosure provides a method of manufacturing a composite panel comprising:
locating a first insert piece in a core of a composite panel, the cavity extending through the core;
positioning a first panel skin and a second panel skin either side of the core;
curing the first panel skin and the second panel skin so as to:
   bond the core to the first panel skin and the second panel skin;
   bond a first face of the first insert piece to the first panel skin; and
   bond a second face of the first insert piece to the second panel skin;
the method further comprising:
forming a through-aperture in the first panel skin corresponding to the position of a bore in the first insert piece, the bore extending from the first face in a direction towards the second face; and
attaching a second insert piece to the bore;
   wherein attaching the second insert piece to the bore comprises
accessing the bore via the through-aperture; and
wherein the second insert piece defines a threaded hole for receiving a fastener.

In some examples, the method further comprises forming the cavity in the core of the composite panel. In other examples, the cavity may be pre-formed in the core.

In some examples, curing the first panel skin comprises: heating the first panel skin to at least partially melt the first panel skin to form a first bonding material; and cooling the first bonding material to bond the first panel skin to the core and to the first insert piece.

In some examples, curing the second panel skin comprises: heating the second panel skin to at least partially melt the second panel skin to form a second bonding material; and cooling the second bonding material to bond the second panel skin to the core and to the first insert piece.

In some examples, curing the first panel skin and the second panel skin comprises evacuating the core.

In some examples, curing the first panel skin and the second panel skin comprises compressing the composite panel. For example, compressing the first panel skin and the second panel skin onto the core and the first insert piece.

In some examples, forming the through-aperture in the first skin panel occurs after bonding the first skin panel to the core.

In some examples, the method further comprises forming a mechanical interlock between the first insert piece and the second insert piece.

In some examples, the mechanical interlock is a screw fit between the bore and the second insert piece.

In some examples, the mechanical interlock is a snap-fit between the bore and the second insert piece.

In some examples, the method comprises forming a floating attachment between the first insert piece and the second insert piece, arranged to allow movement of the second insert piece relative to the first insert piece.

In some examples, the method further comprises curing additional layers of panel skin material to an exterior face of the first panel skin at least locally to the first insert piece.

The method of the second aspect of the disclosure may be used to manufacture any of the examples of the composite panel according to the first aspect of the disclosure. Therefore, it will be readily understood that any of the optional features of the first aspect of the present disclosure may apply to the composite panel manufactured by the method of the second aspect of the disclosure.

When viewed from a third aspect, the present disclosure provides a composite panel comprising:
a first panel skin;
a second panel skin;
a core arranged between the first panel skin and the second panel skin;
wherein the core is bonded to the first panel skin and to the second panel skin;
the composite panel further comprising a threaded insert;
wherein the core defines a cavity extending between the first panel skin and the second panel skin;
wherein the threaded insert is arranged within the cavity and at least partially enclosed by the core, the first panel skin and the second panel skin;
wherein a first face of the threaded insert is bonded to the first panel skin, and a second face of the first insert piece is bonded to the second panel skin;
wherein the threaded insert defines a threaded hole extending from the first face in a direction towards the second face for receiving a fastener; and
wherein the first panel skin defines a through-aperture corresponding to the position of the threaded hole.

In some examples, a first bonding material bonds the first panel skin to the core; wherein the first bonding material bonds the first panel skin to the first face of the first insert piece.

In some examples, a second bonding material bonds the second panel skin to the core; wherein the second bonding material bonds the second panel skin to the second face of the first insert piece.

In some examples, the second bonding material is the same as the first bonding material.

In some examples, the first panel skin is made of the first bonding material. For example, the first panel skin may be at least partially melted to form the first bonding material.

In some examples, the second panel skin is made of the second bonding material.

In some examples, the threaded insert is bonded to the core.

In some examples, the first bonding material and/or the second bonding material bond the threaded insert to the core.

In some examples, the threaded insert defines a plurality of threaded holes.

In some examples, the first panel skin comprises a plurality of through-apertures corresponding to the positions of the plurality of threaded holes.

In some examples, the first panel skin comprises a first fibre reinforced polymer. For example, glass reinforced polymer.

In some examples, the second panel skin comprises a second fibre reinforced polymer.

In some examples, the first fibre reinforced polymer is the same as the second fibre reinforced polymer.

In some examples, the threaded insert has a solid structure.

In some examples, the threaded insert is monolithic.

In some examples, the threaded insert is plastic.

In some examples, the threaded insert is metal.

In some examples, the threaded insert is aluminium.

In some examples, the threaded insert fills the cavity.

In some examples, the core has a non-solid structure. For example, the core may have a honeycomb structure.

In some examples, the composite panel further comprises one or more additional layers of panel skin material attached to an exterior face of the first panel skin at least locally to the first insert piece.

When viewed from a fourth aspect, the present disclosure provides a method of manufacturing a composite panel comprising:
forming a cavity in a core of a composite panel extending through the core;
locating an insert in the cavity;
positioning a first panel skin and a second panel skin either side of the core;
curing the first panel skin and the second panel skin so as to:
   bond the core to the first panel skin and the second panel skin;
   bond a first face of the insert to the first panel skin; and
   bond a second face of the insert to the second panel skin;
the method further comprising:
forming a through-aperture in the first panel skin corresponding to the position of the insert; and
after bonding a first face of the insert to the first panel skin, forming a threaded hole for receiving a fastener in the insert via the through-aperture, the threaded hole extending from the first face in a direction towards the second face.

In some examples, the method further comprises forming the cavity in the core of the composite panel.

In some examples, curing the first panel skin comprises: heating the first panel skin to at least partially melt the first panel skin to form a first bonding material; and cooling the first bonding material to bond the first panel skin to the core and to the threaded insert.

In some examples, curing the second panel skin comprises: heating the second panel skin to at least partially melt the second panel skin to form a second bonding material; and cooling the second bonding material to bond the second panel skin to the core and to the threaded insert.

In some examples, curing the first panel skin and the second panel skin comprises evacuating the core.

In some examples, curing the first panel skin and the second panel skin comprises compressing the composite panel. For example, compressing the first panel skin and the second panel skin onto the core and the threaded insert.

In some examples, forming the through-aperture in the first skin panel occurs after bonding the first skin panel to the core.

In some examples, the method comprises forming a floating attachment between the first insert piece and the second insert piece, arranged to allow movement of the second insert piece relative to the first insert piece.

In some examples, the method further comprises curing additional layers of panel skin material to an exterior face of the first panel skin at least locally to the threaded insert.

The method of the fourth aspect of the disclosure may be used to manufacture any of the examples of a composite panel according to the third aspect of the disclosure. Therefore, it will be readily understood that any of the optional features of the third aspect of the present disclosure may apply to the composite panel manufactured by the method of the fourth aspect of the disclosure.

### Brief description of drawings

One or more non-limiting examples will now be described, by way of example only, and with reference to the accompanying figures in which:
Figure 1 shows a composite panel comprising a threaded insert and represents the state of the art;
Figure 2a shows a first example of a composite panel, comprising a two-part threaded insert;
Figure 2b shows an exploded view of the composite panel of Figure 2a;
Figure 2c shows a variation of the composite panel of Figures 2a and 2b wherein the second insert piece is snap-fit into the first insert piece according to a first example;
Figure 2d shows another variation of the composite panel of Figures 2a and 2b wherein the second insert piece is snap-fit into the first insert piece according to a second example;
Figure 3 shows a method of manufacturing the composite panel comprising a two-part threaded insert;
Figure 4 shows a second example of a composite panel, comprising a one-part threaded insert; and
Figure 5 shows a method of manufacturing the composite panel comprising a one-part threaded insert.

### Detailed description

Figure 2a shows a composite panel 200 comprising a first panel skin 202 and a second panel skin 203 either side of a core 201. The core 201 defines a cavity extending between the first panel skin 202 and the second panel skin 203. The composite panel 200 comprises a first insert piece 210, which fills the cavity in the core 201 of the composite panel 200.

The first panel skin 202 is bonded to a first face 212 of the first insert piece 210 and the core 201 by a first bonding material. In this example, the first bonding material is a partially melted portion of the first panel skin 202.

The second panel skin 203 is bonded to a second face 213 of the first insert piece 210 and the core 201 by a second bonding material. In this example, the second bonding material is a partially melted portion of the second panel skin 203.

By locating the first threaded insert piece 210 within the cavity prior to bonding the first panel skin 202 and the second panel skin 203 to the core, the first panel skin 202 and the second panel skin may be bonded to the first insert piece 210 during the process of curing the first panel skin 202 and the second panel skin 203 to the core 201. This may eliminate the need for an additional potting process and/or eliminate the need to use potting compound during the manufacture of the composite panel 200.

The first insert piece 210 comprises a bore 211 which, in this example, is pre-formed in the first insert piece 210. The bore 211 is arranged to receive, and attach to, a second insert piece 220. In order to access the bore 211, for attaching the second insert piece 220, an aperture must be formed in the first panel skin 202 at the position of the bore 211. In this example, the aperture is formed after bonding the first panel skin 202 to the first face 212 of the first insert piece 210.

The second insert piece 220 comprises a threaded hole 221 for receiving a fastener, for example a bolt. This may enable objects to be fastened to the composite panel 200.

The use of a second insert piece 220, for example as opposed to using a first insert piece with a pre-formed threaded hole, may be preferable to avoid the bonding material used to bond the first panel skin 202 to the first insert piece 210 and the core 201 entering a threaded hole in the first insert piece during the curing process. The presence of bonding material in a threaded hole may make the thread unusable.

The use of a second insert piece 220 may be preferable if the threaded hole is intended to stand proud of, i.e. extend beyond, the interface between first panel skin 202 and the first face 212 of the first insert piece 210. If this is the case, it is not possible to use a one-piece insert with a threaded hole, as the one-piece insert would prevent the first panel skin 202 sitting flat on the first insert piece and the core 201 during the curing process to bond the first panel skin 202 to the first insert piece and the core 201. The only way to accommodate such a first insert piece would be to preform apertures in the first panel skin, which may require relatively costly and inefficient precision machining and/or alignment of the first panel skin prior to the curing process.

The use of a second insert piece 220 may also be preferable to enable the choice of mechanical fitting for attachment to the composite panel 200 to be determined after manufacture of the panel 200. For example, an appropriate second insert piece 220 may be chosen to accommodate a counter-sunk headed screw or a flat-headed screw depending on the application or use case of the composite panel 200.

The attachment of the second insert piece 220 to the first insert piece 210 may include using an adhesive, however in this example it is a mechanical attachment. In this example, the second insert piece 220 has an external thread which is a self-tapping thread, i.e. it taps a corresponding internal thread into the bore 211 as it is screwed into the first insert piece 210. In other examples, the internal thread of the bore 211 may be tapped prior to screwing in the second insert piece 220. In this example, the interlock forms a self-locking thread, i.e. it is possible to screw the second insert piece 220 into the bore 211, but it is not possible to unscrew the second insert piece 220 from the bore 211.

In this example, the first panel skin 202 and the second panel skin 203 are glass reinforced fibre. This may be a suitable material for a lightweight and robust composite panel 200.

In this example, the core 201 has a honeycomb structure, which may be suitable for a lightweight composite panel 200. A honeycomb structure may preclude the core 201 defining a threaded hole, hence the need for a threaded insert.

In this example, the first insert piece 210 and the second insert piece 220 are monolithic aluminium pieces. In other examples, the first insert piece 210 and the second insert piece 220 may be different materials and/or may be not be monolithic, e.g. the first insert piece may be a two-part piece.

The choice of lightweight materials may be particularly convenient for installing the composite panel 200 in aircraft or using it in aerospace applications.

In some examples, the first insert piece 210 comprises a plurality of bores 211 for attaching a plurality of second insert pieces 220. In some examples, the second insert piece comprises a plurality of threaded holes 221 for receiving a plurality of fasteners.

Bonding the first insert piece 210 to both the first panel skin 202 and the second panel skin 203 may ensure an improvement in the force is transfer from the first insert piece 210 to the composite panel 200 and/or an improvement in the pull-out strength of the first insert piece 210.

In this example, the first insert piece 210 is also bonded to the core 201. Bonding the first insert piece 210 to the core 201, e.g. during the curing process and using the same adhesive that is used to bond the first panel skin 202 and/or the second panel skin 203 to the core 201 and the first insert piece 210, may help stabilise the first insert piece 210 within the composite panel 200.

In this example, additional layers of skin panel material 204 are applied locally around the location of the first insert piece 210, e.g. cured onto the first panel skin 202. This may further improve the pull-out strength of the first insert piece 210.

Figure 2b shows a simplified exploded view of the composite panel 200 of Figure 2a. In addition to various of the features shown in Figure 2b, the cavity 205 formed in the core 201 can be seen in Figure 2b, and so can the aperture 206 in the first panel skin 202.

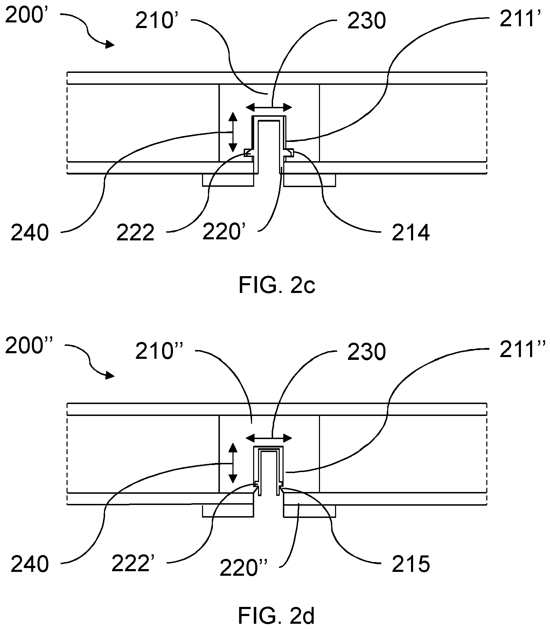

Figure 2c shows a variant 200' of the composite panel 200 shown in Figure 2a. In this example, the bore 211' of the first insert piece 210' comprises two indentations 214 for receiving corresponding extensions 222 of the second insert piece 220'. The indentations 214 extend radially outward from the bore 211'. The extensions 222 are arranged to flex to enable the second insert piece 220' to be inserted into the first insert piece 210', and then the extensions 222 snap into place. This forms a snap-fit type of mechanical interlock between the first insert piece 210' and the second insert piece 220'.

In this example, the indentations 214 extend further in the direction radially outward from the bore 211' than the protrusions 222. Therefore, the second insert piece 220' may move laterally by a small amount, thereby providing a floating attachment of the second insert piece 220'. In some examples, the second insert piece 220' may only be allowed to move in the radial 230 direction. In some examples, the second insert piece 220' may be allowed to move in only the axial 240 direction. Movement in the axial 240 direction may be provided by having a second insert piece 220' which is arranged not to extend through the entire depth of the bore 211'. In some examples, the second insert piece 220' is allowed to move in both the radial 230 and the axial 240 directions.

In this example, the mechanical interlock allows radial 230 movement of the second insert piece in the plane of the first panel skin 202, i.e. side to side movement of the second insert piece 220', for example of 1 mm either side. This movement may accommodate manufacturing tolerance errors, while still enabling the threaded hole 221 to be in the necessary position, for example in relation to other threaded holes in the composite panel 200.

In this example, two indentations 214 are provided and two corresponding extensions 222. However, in other examples there could be one, or more than two, of each of the indentations 214 and the extensions 222.

Figure 2d is a further variation 200" of the composite panel 200 of Figure 2a. In this example, the first insert piece 210" comprises protrusions 215 extending radially inwards from the bore 211". These protrusions are arranged to receive the second insert piece 220". The second insert piece 220" has extensions 222' arranged to snap-fit within the protrusions 215, thus mechanically interlocking the second insert piece 220" with the first insert piece 210".

In this example, the bore 211" for the second insert piece 220" is larger than the second insert piece 220". Hence, the second insert piece 220" is a floating insert piece, which can move in the radial direction 230 and axial direction 240, i.e. a floating attachment.

While this example shows two protrusions 215 and extensions 222', one or a plurality of protrusions 215 and extensions 222' may instead be used.

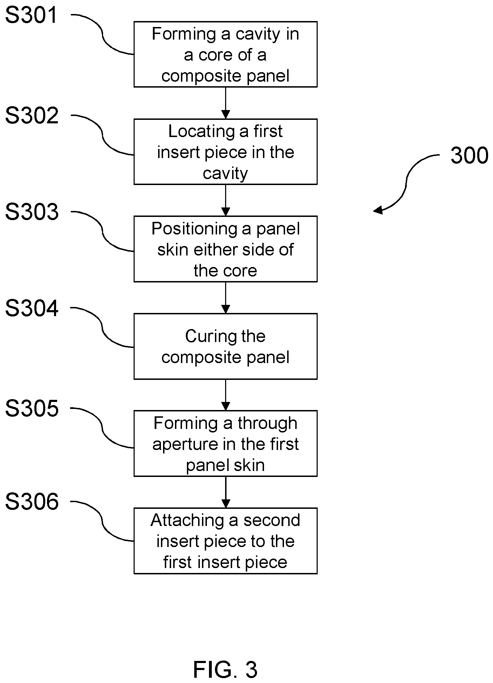

Figure 3 shows a method 300 of manufacturing a composite panel, such as the composite panel 200 of Figure 2.

The method 300 comprises a first step S301 of forming a cavity in a core of a composite panel. The cavity extends through the core. In other examples, the cavity may be pre-formed in the core, and therefore the step S301 included in this example is an optional method step.

The method 300 comprises a second step S302 of locating, i.e. positioning, a first insert piece in the cavity.

The method 300 comprises a third step S303 of curing the composite panel. The process of curing the composite panel comprises bonding a first panel skin and a second panel skin either side of the core, i.e. either side of the cavity formed in the core, so as to bond the first panel skin to the core and a first face of the first insert piece, and to bond the second panel skin to the core and a second face of the first insert piece. In this example, curing the composite panel comprises heating the first panel skin to form a first bonding material to bond the first panel skin to the core and the first face of the first insert piece. In this example, curing the composite panel comprises heating the second panel skin to form a second bonding material to bond the second panel skin to the core and the second face of the first insert piece. In other examples, the curing of the composite panel may be, for example, chemical curing of a first and second bonding material to respectively bond the first and second panel skins to the core and the first insert piece.

In this example, the step S303 of curing the composite panel includes evacuating the core of the composite panel so as to draw the first and/or second bonding material into the core.

In this example, the step S303 of curing the composite panel includes using the first and second bonding materials to bond the first insert piece to the core.

In this example, the step S303 of curing the composite panel includes compressing the composite panel while it cures.

In this example, the step S303 of curing the composite panel includes adding panel skin material to the first panel skin locally to the first insert piece.

The method 300 further comprises a fourth step S304 of forming a through aperture in the first panel skin corresponding to the position of a bore, e.g. a pre-formed bore, in the first insert piece so as to access the bore. In this example, the method 300 comprises the step S304 of forming the through aperture through the first panel skin after the step S303 of curing the composite panel. However, in other examples these steps S303, S304 may happen in the alternate order or simultaneously.

The method 300 further comprises a fifth step S305 of attaching a second insert piece to the bore of the first insert piece, e.g. using a mechanical attachment, via the through-aperture formed in the first panel skin. The second insert piece defines a threaded hole for receiving a fastener, e.g. to fix an object to the composite panel.

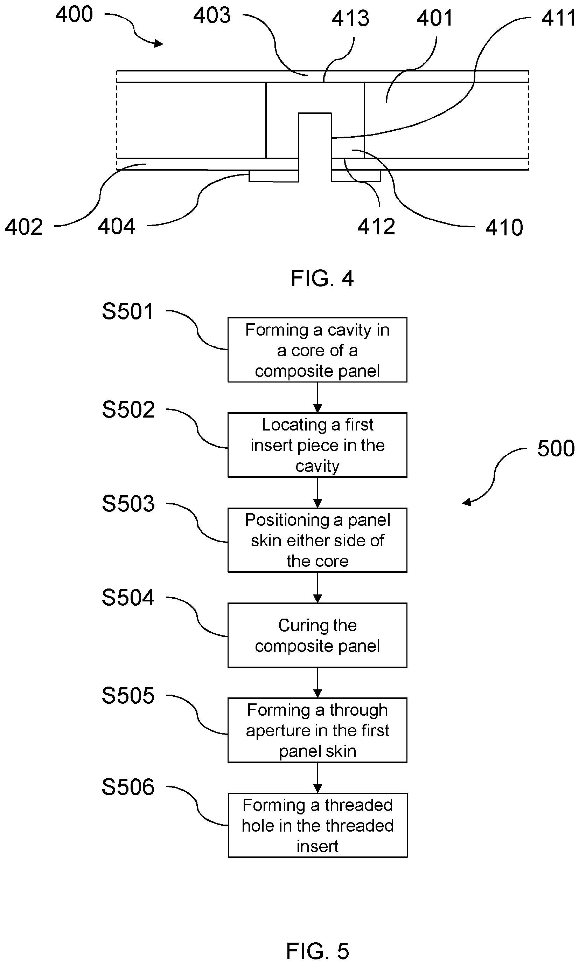

Figure 4 shows another example of a composite panel 400, which comprises a one-part threaded insert 410. The composite panel 400 comprises a first panel skin 402 and a second panel skin 403 either side of a core 401. The core 401 defines a cavity extending between the first panel skin 402 and the second panel skin 403. The composite panel 400 comprises a threaded insert 410, which fills the cavity in the core 401 of the composite panel 400.

The first panel skin 402 is bonded to a first face 412 of the first insert piece 410 and the core 401 by a first bonding material. In this example, the first bonding material is a partially melted portion of the first panel skin 402.

The second panel skin 403 is bonded to a second face 413 of the first insert piece 410 and the core 401 by a second bonding material. In this example, the second bonding material is a partially melted portion of the second panel skin 403.

The first insert piece 410 defines a threaded hole 411 which, is formed after the first and panel skins are bonded to the core and the first insert piece. For instance, in this example a hole is drilled through the first panel skin 402 to define the hole in the threaded insert. The hole is then tapped so as to form a threaded hole 411. The threaded hole 411 may receive a fastener, for example a bolt. This may enable objects to be fastened to the composite panel 400.

Forming the threaded hole 411 after manufacture of the composite panel 400 may preferably enable the choice of mechanical fitting for attachment to the composite panel 400 to be determined after manufacture of the panel 200. For example, an appropriate threaded hole 411 may be formed in the insert piece 411 based on the choice of fastener that the threaded hole 411 is arranged to receive, e.g. a counter-sunk headed screw or a flat-headed screw. This may depend on the application or use case of the composite panel 400.

The presence of bonding material in a threaded hole may make the thread unusable. However, by forming the threaded hole 411 after curing the first panel skin 402 and the second panel skin 403, i.e. after binding the first and second panel skins 402, 403 to the core 401 and the threaded insert 410, the bonding material used to bond the first panel skin 202 to the first insert piece 210 and the core 401 may be prevented from entering the threaded hole 410 during the curing process.

In this example, the first panel skin 402 and the second panel skin 403 are glass reinforced fibre.

In this example, the core 401 has a honeycomb structure, which may be suitable for a lightweight composite panel 400.

The threaded insert 410 is a monolithic piece of material e.g. made of metal (e.g. aluminium) or plastic.

In some examples, the threaded insert 410 comprises a plurality of threaded holes 411 for attaching a plurality of fasteners.

In this example, the threaded insert 410 is also bonded to the core 401.

In this example, additional layers of skin panel material 404 are applied locally around the location of the threaded insert 410, e.g. cured onto the first panel skin 402.

Figure 5 shows a method 500 of manufacturing a composite panel, such as the composite panel 400 of Figure 4.

The method 500 comprises a first step S501 of forming a cavity in a core of a composite panel. The cavity extends through the core. In other examples, the cavity may be pre-formed in the core, and therefore the step S501 included in this example is an optional method step.

The method 500 comprises a second step S502 of locating, i.e. positioning, a threaded insert in the cavity.

The method 500 comprises a third step S503 of curing the composite panel. The process of curing the composite panel comprises bonding a first panel skin and a second panel skin either side of the core, i.e. either side of the cavity formed in the core, so as to bond the first panel skin to the core and a first face of the threaded insert, and to bond the second panel skin to the core and a second face of the threaded insert.

In this example, curing the composite panel comprises heating the first panel skin to form a first bonding material to bond the first panel skin to the core and the first face of the threaded insert.

In this example, curing the composite panel comprises heating the second panel skin to form a second bonding material to bond the second panel skin to the core and the second face of the threaded insert.

In other examples, the curing of the composite panel may be, for example, chemical curing of a first and second bonding material to respectively bond the first and second panel skins to the core and the threaded insert.

In this example, the step S503 of curing the composite panel includes evacuating the core of the composite panel so as to draw the first and/or second bonding material into the core.

In this example, the step S503 of curing the composite panel includes compressing and/or heating the composite panel while it cures.

In this example, the step S503 of curing the composite panel includes adding panel skin material to the first panel skin locally to the threaded insert.

In this example, the step S503 of curing the composite panel includes using the first and/or second bonding material to bond the threaded insert to the core.

The method 500 further comprises a fourth step S504 of forming a through aperture in the first panel skin.

The method 500 further comprises a fifth step S505 of forming a threaded hole in the threaded insert, e.g. by drilling a hole into the threaded insert through the aperture formed in the first skin panel and tapping the drilled hole. The threaded hole may receive a fastener, e.g. to fix an object to the composite panel.

## Claims

1. A composite panel comprising:
a first panel skin;
a second panel skin;
a core arranged between the first panel skin and the second panel skin;
wherein the core is bonded to the first panel skin and the second panel skin;
the composite panel further comprising a two-part insert comprising:
a first insert piece;
and a second insert piece;
wherein the core defines a cavity extending between the first panel skin and the second panel skin;
wherein the first insert piece is arranged within the cavity and at least partially enclosed by the core, the first panel skin and the second panel skin;
wherein a first face of the first insert piece is bonded to the first panel skin, and a second face of the first insert piece is bonded to the second panel skin;
wherein the first insert piece defines a bore extending from the first face in a direction towards the second face;
wherein the first panel skin defines a through-aperture corresponding to the position of the bore;
wherein the second insert piece is arranged in the bore and attached to the first insert piece; and
wherein the second insert piece defines a threaded hole for receiving a fastener.

2. The composite panel of claim 1 wherein a bonding material bonds the first panel skin to the core;
wherein the bonding material bonds the first panel skin to the first face of the first insert piece;
wherein the bonding material bonds the second panel skin to the core;
wherein the bonding material bonds the second panel skin to the second face of the first insert piece; and
wherein the first panel skin and the second panel skin are made of the bonding material.

3. The composite panel of any preceding claim wherein the second insert piece defines a plurality of threaded holes.

4. The composite panel of any preceding claim wherein the first panel skin and the second panel skin comprise a fibre reinforced polymer.

5. The composite panel of any preceding claim wherein the first insert piece is a monolithic piece and has a solid structure; optionally
wherein the first insert piece is made of plastic or metal e.g. aluminium.

6. The composite panel of any preceding claim wherein the first insert piece substantially fills the cavity.

7. The composite panel of any preceding claim wherein the second insert piece is attached to the first insert piece by a mechanical interlock; and
optionally wherein the mechanical interlock includes at least one of: a screw fit, e.g. a self-locking thread, between the bore and the second insert piece and a snap-fit between the bore and the second insert piece.

8. The composite panel of any preceding claim wherein the attachment between first insert piece and the second insert piece forms a floating attachment, arranged to allow movement of the second insert piece relative to the first insert piece.

9. The composite panel of any preceding claim further comprising one or more additional layers of panel skin material attached to an exterior face of the first panel skin at least locally to the first insert piece.

10. A method of manufacturing a composite panel comprising:
locating a first insert piece in a cavity in a core of a composite panel, the cavity extending through the core;
positioning a first panel skin and a second panel skin either side of the core;
curing the first panel skin and the second panel skin so as to:
bond the core to the first panel skin and the second panel skin;
bond a first face of the first insert piece to the first panel skin; and
bond a second face of the first insert piece to the second panel skin;
the method further comprising:
forming a through-aperture in the first panel skin corresponding to the position of a bore in the first insert piece, the bore extending from the first face in a direction towards the second face; and
attaching a second insert piece to the bore;
wherein attaching the second insert piece to the bore comprises
accessing the bore via the through-aperture; and
wherein the second insert piece defines a threaded hole for receiving a fastener.

11. The method of claim 10 wherein curing the first panel skin and the second panel skin comprises:
heating the first panel skin and the second panel skin to at least partially melt the first panel skin and the second panel skin to form a bonding material; and
cooling the bonding material to bond the first panel skin and the second panel skin to the core and to the first insert piece.

12. The method of claim 10 or 11 wherein curing the first panel skin and the second panel skin comprises evacuating the core.

13. The method of any one of claims 10 to 12 wherein forming the through-aperture in the first skin panel occurs after bonding the first skin panel to the core.

14. A composite panel comprising:
a first panel skin;
a second panel skin;
a core arranged between the first panel skin and the second panel skin;
wherein the core is bonded to the first panel skin and to the second panel skin;
the composite panel further comprising a threaded insert;
wherein the core defines a cavity extending between the first panel skin and the second panel skin;
wherein the threaded insert is arranged within the cavity and at least partially enclosed by the core, the first panel skin and the second panel skin;
wherein a first face of the threaded insert is bonded to the first panel skin, and a second face of the first insert piece is bonded to the second panel skin;
wherein the threaded insert defines a threaded hole extending from the first face in a direction towards the second face for receiving a fastener; and
wherein the first panel skin defines a through-aperture corresponding to the position of the threaded hole.

15. A method of manufacturing a composite panel comprising:
locating an insert in a cavity in a core of a composite panel, the cavity extending through the core;
positioning a first panel skin and a second panel skin either side of the core;
curing the first panel skin and the second panel skin so as to:
bond the core to the first panel skin and the second panel skin;
bond a first face of the insert to the first panel skin; and
bond a second face of the insert to the second panel skin;
the method further comprising:
forming a through-aperture in the first panel skin corresponding to the position of the insert; and
after bonding a first face of the insert to the first panel skin, forming a threaded hole for receiving a fastener in the insert via the through-aperture, the threaded hole extending from the first face in a direction towards the second face.
